# EUROPEAN PATENT SPECIFICATION

(11) **EP 4 095 371 B1**
(45) Date of publication and mention of the grant of the patent: **18.09.2024**
(21) Application number: 22175647.1
(22) Date of filing: 26.05.2022
(51) Int. Cl.: F02C 7/16, F02C 7/236, F02C 7/14, F02C 7/32

(54) **HEAT EXCHANGE SYSTEM FOR AIRCRAFT ENGINE**
WÄRMEAUSTAUSCHSYSTEM FÜR EIN FLUGZEUGTRIEBWERK
SYSTÈME D'ÉCHANGE DE CHALEUR POUR MOTEUR D'AÉRONEF

(30) Priority: 26.05.2021 US 202117330550
(43) Date of publication of application: 30.11.2022
(73) Proprietor: PRATT & WHITNEY CANADA CORP., Longueuil, Québec J4G 1A1 (CA)
(72) Inventor: ADIQUE, Marc Jordan, (01BE5) Longueuil, J4G 1A1 (CA); RUTKE, Timothy, (01BE5) Longueuil, J4G 1A1 (CA); DOMINGO, Ritchie, (01BE5) Longueuil, J4G 1A1 (CA)
(74) Representative: Dehns

(56) References cited:
- US-B1- 6 189 313
- US-B2- 10 914 236

## Description

### TECHNICAL FIELD

The disclosure relates generally to aircraft engines and, more particularly, to heat exchanger systems used in such engines.

### BACKGROUND

Aircraft engines use heat exchangers for various reasons. Such an aircraft engine heat exchanger may include a fuel-oil heat exchanger (FOHE), sometimes referred to as a fuel/oil cooler, which is typically used to simultaneously heat the fuel prior to its injection into a combustion chamber and cool bearing oil. In an aircraft, costs, maintenance, weight and size can be important considerations when designing the fluid systems. The size of the heat exchanger is typically directly related to its heat exchange capacity. There is an ever-present need for improvements in the field of aircraft heat exchangers and their methods of use. Document US6189313 discloses a heat exchanger system according to the prior art.

### SUMMARY

There is accordingly provided a heat exchange system for an aircraft engine, comprising: a heat exchanger having at least one first conduit and at least one second conduit in heat exchange relationship with the at least one first conduit; a main conduit directing a main flow of fuel from a fuel source to a combustion chamber of the aircraft engine; a pump hydraulically connected to the main conduit for driving the main fuel flow through the main conduit to the combustion chamber; a return conduit receiving excess fuel outputted by the pump and exceeding a fuel requirement of the combustion chamber, the return conduit having a return inlet hydraulically connected to the main conduit downstream of the pump and a return outlet hydraulically connected to the main conduit upstream of the pump, the return conduit hydraulically connected to the at least one second conduit of the heat exchanger; and an actuator having an actuator inlet hydraulically connected to the main conduit downstream of the pump and an actuator outlet hydraulically connected to the main conduit upstream of the pump while bypassing the heat exchanger, wherein a pressure differential between the actuator inlet and the actuator outlet remains substantially unchanged with variations of a fuel flow through the at least one second conduit of the heat exchanger.

The heat exchange system for an aircraft engine as defined above and herein may further include one or more of the following additional elements, in whole or in part, and in any combination.

In certain embodiments, the pump is a high-pressure pump, a low-pressure pump located upstream of the high-pressure pump and hydraulically connected on the main conduit.

In certain embodiments, the return conduit is hydraulically connected to the main conduit between the high-pressure pump and the low-pressure pump.

In certain embodiments, the low-pressure pump includes an impeller and wherein the high-pressure pump is a fixed-displacement pump.

In certain embodiments, the actuator outlet is hydraulically connected to the return conduit at a connection point downstream of the heat exchanger.

In certain embodiments, a bypass conduit is provided having a bypass inlet hydraulically connected to the return conduit upstream of the heat exchanger and a bypass outlet hydraulically connected to the main conduit upstream of the pump.

In certain embodiments, a controlled orifice is provided between the bypass inlet and the bypass outlet.

In certain embodiments, the controlled orifice is variable in size for controlling a flow of a fluid flowing into the bypass conduit.

There is also provided a method of operating a heat exchange system of an aircraft engine, as set forth in claim 7.

The method as defined above and herein may further include one or more of the following additional elements and/or steps, in whole or in part, and in any combination.

In certain embodiments, reinjecting the spill flow includes flowing the spill flow into a return conduit in fluid flow communication with the heat exchanger.

In certain embodiments, injecting of the output fuel flow from the actuator includes injecting the output fuel flow into the return conduit at a connection point on the return conduit and located downstream of the heat exchanger.

In certain embodiments, feeding of the fuel to the combustor includes drawing fuel from a fuel source with a second pump, the reinjecting of the spill flow includes reinjecting the spill flow into a main fuel conduit at a connection point between the pump and the second pump.

In certain embodiments, the method further includes flowing a portion of the spill flow outside the heat exchanger such that the portion of the spill flow bypasses the heat exchanger.

In certain embodiments, the method further includes injecting the portion of the spill flow upstream of the pump.

In certain embodiments, the method further includes controlling a mass flow rate of the portion of the spill flow.

In certain embodiments, controlling of the mass flow rate includes flowing the portion of the spill flow through a controlled orifice.

In certain embodiments, the method further includes varying a size of the controlled orifice to vary a mass flow rate of fuel through the heat exchanger.

In certain embodiments, flowing of the spill flow of the pump through the heat exchanger to exchange heat between the spill flow and another fluid includes exchanging heat between the fuel and oil via the heat exchanger.

In certain embodiments, the method further includes receiving a sensor signal from at least one sensor, the sensor signal indicative of a temperature of the fuel fed to the combustor being lower than a temperature threshold, the method comprising increasing a mass flow rate of the fuel flowing through the heat exchanger.

In certain embodiments, increasing of the mass flow rate includes increasing an output mass flow rate of the pump and/or decreasing a bypass mass flow rate of fuel that bypasses the heat exchanger.

### BRIEF DESCRIPTION OF THE DRAWINGS

Reference is now made to the accompanying figures in which:
Fig. 1 is a schematic cross sectional view of an aircraft engine depicted as a gas turbine engine in accordance with one embodiment;
Fig. 2 is a schematic view of a heat exchange system for the aircraft engine of Fig. 1;
Fig. 3 is a flow chart illustrating steps for operating the heat exchange system of Fig. 2; and
Fig. 4 is a schematic view of a controller in accordance with one embodiment.

### DETAILED DESCRIPTION

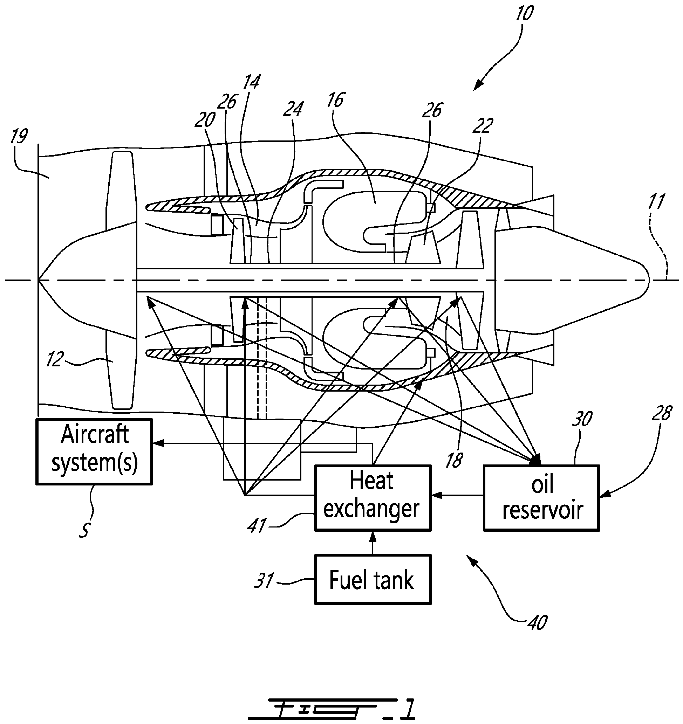

Fig. 1 illustrated an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. More specifically, the gas turbine engine 10 has a core gas path including an intake 19 for receiving air. The compressor section 14 has at least one compressor 20 extending across the core gas path and the turbine section 18 has at least one turbine 22 extending across the core gas path, with the at least one compressor 20 and the at least one turbine 22 being rotatable with a rotary shaft 24 supported within the gas turbine engine 10 by bearings 26. An oil system 28 is provided for circulating oil to the bearings 26 and back to an oil reservoir 30. It will be appreciated that the principles of the disclosure apply to any aircraft engines, such as internal combustion engines (e.g., piston engine, rotary engine), any type of gas turbine engines, (e.g., turbofan, turboshaft, and turboprop), and auxiliary power unit.

In the embodiment shown, the gas turbine engine 10 has a heat exchange system 40 that is used to exchange heat between different fluids for proper operation of the gas turbine engine 10. In the present case, the heat exchange system 40 includes a heat exchanger 41, which may be referred to as a fuel-oil heat exchanger (FOHE), used for transferring heat from the oil of the oil system 28 to fuel flowing from a fuel tank 31, or any other fuel source, to the combustor 16 of the gas turbine engine 10 for combustion. Preheating the fuel as such may increase efficiency of the combustion of the fuel and may cool down the oil that heats up while lubricating the bearings 26. In some cases, the heat exchanger 41 may be used to transfer or extract heat to/from an aircraft system S in need.

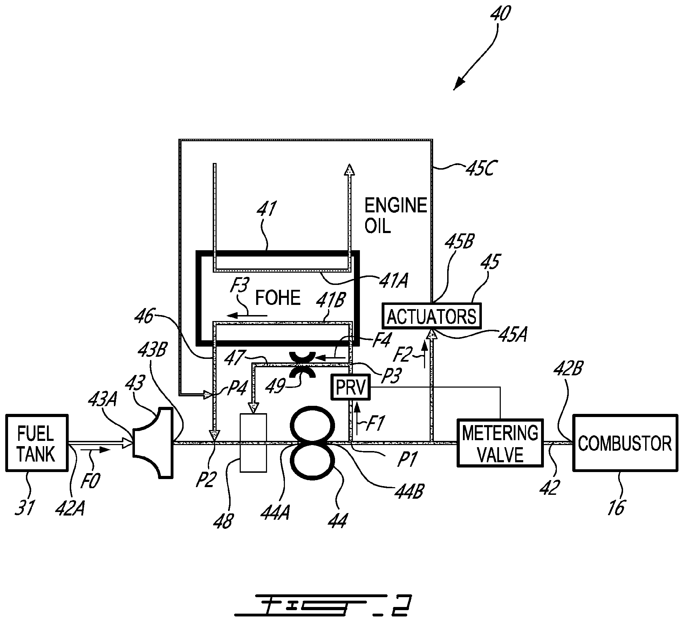

Referring now to Fig. 2, a more detail view of the heat exchange system 40 is provided. The heat exchange system 40 includes a main fuel conduit (or simply "main conduit") 42 that has an inlet 42A hydraulically connected to the fuel tank 31 and an outlet 42B hydraulically connected to the combustor 16. A first pump 43 is used to draw fuel from the fuel tank 31 and hydraulically connected to the main fuel conduit 42 to generate a fuel flow F0 and to increase fluid pressure. The first pump 43 may be referred to as a low-pressure pump since a mass flow rate outputted by the first pump 43 may vary as a function of a pressure in the main fuel conduit 42 downstream of the first pump 43. In other words, a pressure rise provided by the first pump 43 may vary as a function of a mass flow rate in the main fuel conduit 42 flowing through the low pressure pump 43. Typically, such a low-pressure pump includes an impeller rotatable to create a pressure rise between a first pump inlet 43A and a first pump outlet 43B of the first pump 43 to draw the fuel from the fuel tank 31. The first pump 43 may be used to support the functionality of the system downstream of the first pump 43, such as providing the second pump with the necessary inlet pressure.

The heat exchange system 40 includes a second pump 44 hydraulically connected to the main fuel conduit 42 downstream of the first pump 43. The second pump 44 may be referred to as a high-pressure pump due to the relatively high pressure rise it offers in relation to the low pressure pump located upstream in order to condition the fuel for combustion. The pressure generated by the second pump 44 may also be used to support downstream component and system functionality. A mass flow rate outputted or generated by the second pump 44 may not vary as a function of a pressure in the main fuel conduit 42 downstream of the second pump 44. Such a high-pressure pump is sometimes referred to as a fixed-displacement pump (e.g., gear pump). At a given rotational speed, a fixed mass flow rate is drawn from a second pump inlet 44A of the second pump 44 to a second pump outlet 44B thereof.

As shown in Fig. 2, an actuator 45 is in fluid flow communication with the main fuel conduit 42. It will be appreciated that more than one actuator may be in fluid flow communication with the main fuel conduit 42. The actuator 45 is referred below in the singular form although more than one actuator may be used. The actuator 45 is driven by a pressure differential between its actuator inlet 45A and its actuator outlet 45B. The actuator 45 may be, for instance, an active clearance control (ACC) actuator, a high-pressure compressor stator vane actuator (HPC SVA), and/or a low-pressure compressor bleed valve actuator (LPC BVA). The actuator 45, by being driven by a force resulting from a pressure differential between its actuator inlet 45A and actuator outlet 45B, is dependent upon where it is connected on the heat exchange system 40. For instance, if the actuator inlet 45A is at a too similar pressure compared to that of the actuator outlet 45B, the actuator 45 may not be able to carry its function since not enough actuation force is provided resultant of a low fuel pressure differential. The actuator 45 is fed with an actuator fuel flow F2 drawn from the main fuel conduit 42 downstream of the second pump 44 an upstream of the combustor 16.

In the embodiment shown, a return conduit 46 stems from the main fuel conduit 42 at a first connection point P1, which corresponds to an inlet (or "return inlet") of the return conduit 46, and is hydraulically connected (i.e. at a "return outlet") to the main fuel conduit 42 at a second connection point P2 on the main fuel conduit 42 and located upstream of the first connection point P1. Since a mass flow rate outputted by the second pump 44 may be substantially higher than necessary for combustion, the return conduit 46 may allow to redirect excess flow, or spill flow F1, from the second pump 44. In other words, there may be a mismatch between the mass flow rate of fuel generated by the second pump 44 and a fuel requirement of the combustor 16. The fuel flow rate to the combustor 16 may be governed by valves (not shown). These valves may be located at location P1. The return conduit 46 diverts the fuel that is not need by the combustor 16 back to the main fuel conduit 42 upstream of the second pump 44. In the embodiment shown, the second connection point P2 is located downstream of the first pump 43 and upstream of the second pump 44. A pressure regulating valve (PRV) may be hydraulically connected on the return conduit 46 upstream of the heat exchanger 41. A metering valve may be hydraulically connected on the main conduit 42 downstream of a connection point between the actuator inlet 45A and the main conduit 42. The pressure regulating valve may be hydraulically connected to the metering valve such that the PRV perceives upstream and downstream pressure of the metering valve.

The heat exchanger 41 includes at least one first conduit 41A for flowing oil from the oil system 28 (Fig. 1) and at least one second conduit 41B for flowing fuel. The heat exchanger 41 is used to warm up the fuel and cool down the oil by providing a heat exchange relationship between the at least one first conduit 41A and the at least one second conduit 41B. The return conduit 46 is in fluid flow communication with the at least one second conduit 41B of the heat exchanger 41 for flowing a flow F3 that will exchange heat with the oil through the heat exchanger 41. Therefore, the spill flow F1 generated by the second pump 44 and not required by the combustor 16 is leveraged to cool down the oil of the oil system 28 and heat up the fuel flowing in the main fuel conduit 42.

The heat exchange system 40 further includes a bypass conduit 47 that stems from the return conduit 46 at a third connection point P3 located downstream of the first connection point P1 and upstream of the heat exchanger 41. The bypass conduit 47 has a bypass inlet at the third connection point P3 and an bypass outlet connected to the main fuel conduit 42. In the present case, the bypass conduit 47 is hydraulically connected to the main fuel conduit 42 through a fuel filter housing 48, but other configurations are contemplated. The bypass conduit 47 may be hydraulically connected to the main fuel conduit 42 downstream of the second connection point P2 and upstream of the second pump 44.

A controlled orifice 49 is hydraulically connected to the bypass conduit 47 between the third connection point P3 and the bypass outlet of the bypass conduit 47. The controlled orifice 49 is used to restrict a flow passage area such that a mass flow rate of a bypass flow F4 flowing into the bypass conduit 47 remains below a given threshold. In use, the spill flow F1 from the second pump 44 flowing in to the return conduit 46 is divided in two flows: the flow F3 that flows into the heat exchanger 41 for picking up heat from the oil; and the bypass flow F4 that flows into the bypass conduit 47 thereby bypassing the heat exchanger 41. The controlled orifice 49 may be variable in size to vary the mass flow rate of fuel that flows into the bypass conduit 47. The smaller the size of the controlled orifice 49, the greater the mass flow rate of fuel that will flow into the at least one second conduit 41B of the heat exchanger 41. To the contrary, the larger the controlled orifice 49, the greater the mass flow rate of the fuel that will flow into the bypass conduit 47 since the restriction across the bypass conduit 47 may be lower compared to that across the at least one second conduit 41B of the heat exchanger 41. The resulting pressure loss the bypass conduit 47 and the return conduit 46 may be lower in such a case, however the heat transfer rate between the fuel and oil may be diminished with the reduction in fuel flow through the heat exchanger 41. The disclosed configuration may keep the actuator force margin unaffected regardless of the size of the orifice 49. In some embodiments, the controlled orifice 49 and the bypass conduit 47 may be omitted. In some cases, the controlled orifice 49 may be actuated such that a dimension of the controlled orifice may be varied as a function of heat requirements of the fuel. In some cases, the controlled orifice 49 may be closed such that all of the spill flow F1 from the second pump 44 is routed through the heat exchanger 41. In an alternate embodiment, the controlled orifice 49 may be alternatively connected to the return conduit 46 downstream of the third connection point P3 and upstream of the heat exchanger 41. In an alternate embodiment, the controlled orifice 49 may be alternatively connected to the return conduit 46 downstream of the fourth connection point P4 and upstream of the fuel filter 48.

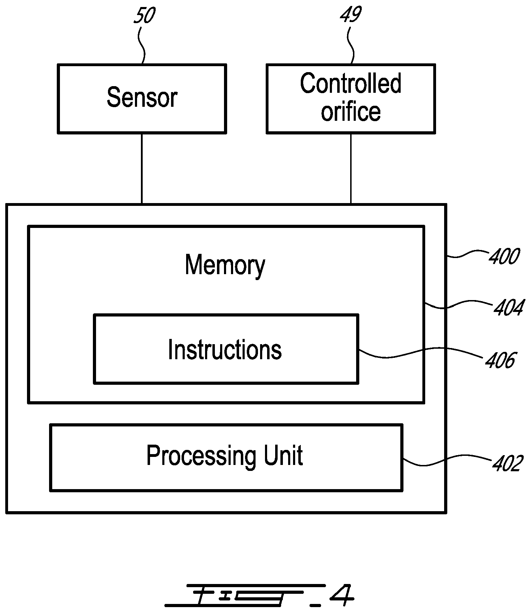

As shown in Fig. 4, at least one sensor 50 may be operatively connected to a controller 400. The at least one sensor 50 may send a signal to the controller 400 indicative of a temperature of the fuel fed to the combustor 16 being lower than a temperature threshold. In some cases, the at least one sensor 50 may send a signal to the controller 400 indicative of a temperature of the fuel fed to the fuel filter 48 being lower than a temperature threshold. In response thereto, the controller 400 may trigger increase a mass flow rate of the fuel flowing through the heat exchanger 41. This may be done by increasing an output mass flow rate of the second pump 44 and/or by decreasing a bypass mass flow rate of fuel that bypasses the heat exchanger 41 by decreasing a size of the controlled orifice 49.

Referring back to Fig. 2, when it is desired to increase a heat transfer between the fuel and the oil to increase a temperature of the fuel fed to combustor 16, the second pump 44 may be operated to increase its output mass flow rate. Alternatively, or in combination, the controlled orifice 49 may be made smaller to force a greater flow across the heat exchanger 41. However, because of this increased flow rate through the heat exchanger 41, a pressure drop across the heat exchanger 41 may increase. This may have the effect of increasing a pressure at an inlet of the at least one second conduit 41B of the heat exchanger 41.

Typically, the actuator outlet 45B of the actuator 45 is hydraulically connected to the return conduit 46 downstream of the first connection point P1 and upstream of the heat exchanger 41. If the pressure drop across the heat exchanger 41 increases, which, as explained above, increases the pressure at the inlet of the heat exchanger 41, a pressure differential between the actuator inlet 45A and the actuator outlet 45B of the actuator 45 may become below a given threshold. This may impede proper operation of the actuator 45.

In the embodiment shown, the actuator outlet 45B is hydraulically connected to the return conduit 46 at a fourth connection point P4 downstream of an outlet of the at least one second conduit 41B of the heat exchanger 41 and upstream of the second connection point P2 between the return conduit 46 and the main fuel conduit 42. It will be appreciated that other locations for the fourth connection point P4 are contemplated. For instance, the fourth connection point P4 may be located directly on the main fuel conduit 42, upstream or downstream of the second connection point P2. The fourth connection point P4 may be located upstream or downstream of the fuel filter 48 and may be located upstream of the first pump 43 in some embodiments. In the depicted embodiment, the actuator 45 is hydraulically connected to an actuator conduit 45C that has an inlet on the main fuel conduit 42 downstream of the first connection point P1 and upstream of the outlet 42B of the main fuel conduit 42. The actuator conduit 45C has an outlet hydraulically connected to the return conduit 46 at the fourth connection point P4.

Consequently, re-routing the outlet of the actuator conduit 45C to a location downstream of the heat exchanger 41 may allow to increase a pressure differential between the actuator inlet 45A and the actuator outlet 45B thanks to the pressure on the return conduit 46 being lower downstream of the heat exchanger 41 than that upstream of the heat exchanger 41. This is caused by the pressure drop observed by the fuel through the at least one second conduit 41B of the heat exchanger 41. Hence, the disclosed heat exchange system 40 may allow the increasing of the heat transfer between the fuel and the oil through the heat exchanger 41 while maintaining the pressure differential across the actuator 45 within an acceptable range. This may be done through a selection of a size of the orifice 49, or by actively controlling at least one dimension of the orifice 49 while not affecting the pressure differential across the actuator 45. In other words, the proposed heat exchange system 40 that connects the actuator outlet 45B downstream of the heat exchanger 41 may allow to maintain a force margin on the actuator 45 within an acceptable range independently of an increase of the mass flow rate of the fuel across the heat exchanger 41.

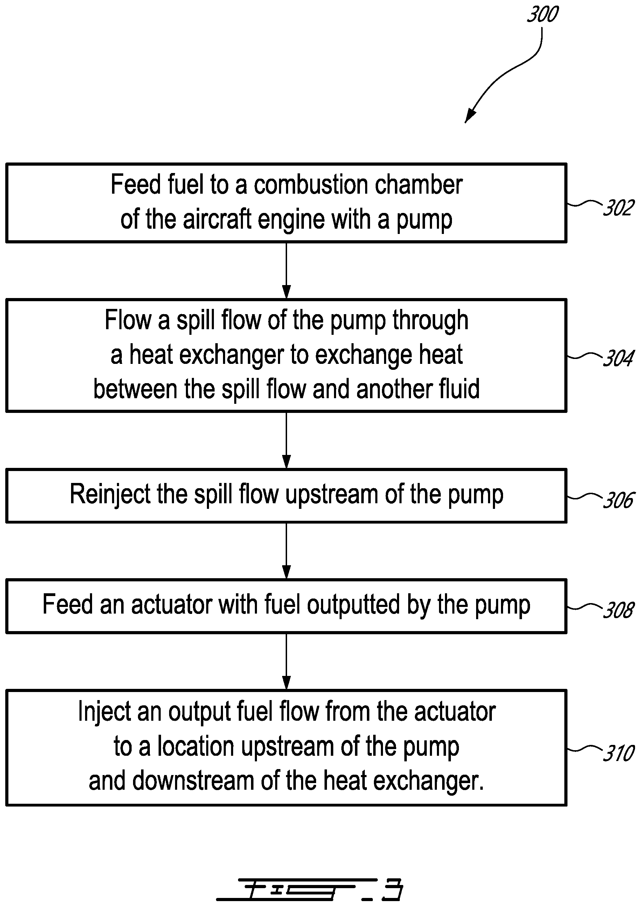

Referring now to Fig. 3, a method for operating the heat exchange system 40 is shown at 300. The method 300 includes feeding fuel to the combustor 16 with the second pump 44 at 302; flowing the spill flow F1 of the second pump 44 through the heat exchanger 41 to exchange heat between the spill flow F1 and oil at 304; reinjecting or merging the spill flow F1 upstream of the second pump 44 at 306; feeding the actuator 45 with fuel outputted by the second pump 44 at 308; and injecting the fuel flow F2 of the actuator 45 at a location upstream of the second pump 44 and downstream of the heat exchanger 41.

In the present embodiment, the reinjecting or merging the spill flow F1 includes flowing the spill flow F1 into the return conduit 46 in fluid flow communication with the heat exchanger 41. The injecting of the fuel flow F2 of the actuator includes injecting the fuel flow F2 of the actuator 45 into the return conduit 46 at the fourth connection point P4 on the return conduit 46 and located downstream of the heat exchanger 41. In the embodiment shown, the feeding of the fuel to the combustor 16 includes drawing fuel from the fuel tank 31 with the first pump 43 and the reinjecting of the spill flow F1 includes reinjecting the spill flow F1 into the main fuel conduit 42 at the second connection point P2 between the first pump 43 and the second pump 44.

In the embodiment shown, the method 300 includes flowing a portion F4 of the spill flow F1 outside the heat exchanger 41 such that the portion F4 of the spill flow F1 bypasses the heat exchanger 41. This may include injecting the portion F4 of the spill flow F1 upstream of the second pump 44.

In the embodiment shown, the method 300 comprises controlling a mass flow rate of the portion F4 of the spill flow F1. This may be done by flowing the portion F4 of the spill flow F1 through the controlled orifice 49. To vary the flow rate of the portion F4 of the spill flow F1 through the bypass conduit 47, a size of the controlled orifice 49 may be varied.

As shown in Figs. 3-4, the method 300 may include receiving a sensor signal from at least one sensor 50, the sensor signal indicative of a temperature of the fuel fed to the combustor 16 being lower than a temperature threshold. At which point, a mass flow rate of a fuel flow F3 flowing through the heat exchanger 41 may be varied. This may be done by increasing an output mass flow rate of the second pump 44 and/or by decreasing a bypass mass flow rate of fuel that bypasses the heat exchanger 41.

With reference to Fig. 4, an example of a controller 400 is illustrated. The controller 400 may include more computing devices operable to exchange data. The controller 400 may be the same or different types of devices. The controller 400 may be implemented with one or more controller 400. Note that the controller 400 can be implemented as part of a full-authority digital engine controls (FADEC) or other similar device, including electronic engine control (EEC), engine control unit (ECU), electronic propeller control, propeller control unit, and the like. In some embodiments, the controller 400 is implemented as a Flight Data Acquisition Storage and Transmission system, such as a FASTTM system. The controller X may be implemented in part in the FASTTM system and in part in the EEC. Other embodiments may also apply.

The controller 400 comprises a processing unit 402 and a memory 404 which has stored therein computer-executable instructions 406. The processing unit 402 may comprise any suitable devices configured to implement the method 300 such that instructions 406, when executed by the controller 400 or other programmable apparatus, may cause the functions/acts/steps performed as part of the method 300 as described herein to be executed. The processing unit 402 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 404 may comprise any suitable known or other machine-readable storage medium. The memory 404 may comprise non-transitory computer readable storage medium, for example, but not limited to, an electronic, magnetic, optical, electromagnetic, infrared, or semiconductor system, apparatus, or device, or any suitable combination of the foregoing. The memory 404 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 404 may comprise any storage means (e.g., devices) suitable for retrievably storing machine-readable instructions 406 executable by processing unit 402.

The methods and systems for operating the heat exchange system 40 described herein may be implemented in a high level procedural or object oriented programming or scripting language, or a combination thereof, to communicate with or assist in the operation of a computer system, for example the controller 400. Alternatively, the methods and systems for operating the heat exchange system 40 may be implemented in assembly or machine language. The language may be a compiled or interpreted language. Program code for implementing the methods and systems for operating the heat exchange system 40 may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems for operating the heat exchange system 40 may also be considered to be implemented by way of a non-transitory computer-readable storage medium having a computer program stored thereon. The computer program may comprise computer-readable instructions which cause a computer, or more specifically the processing unit 402 of the controller 400, to operate in a specific and predefined manner to perform the functions described herein, for example those described in the method 300.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

It will be appreciated that the disclosed heat exchange system 40 is not limited to be used with a fuel-oil heat exchanger and that any heat exchanger may benefit from the principles of the present disclosure.

## Claims

1. A heat exchange system (40) for an aircraft engine (10), comprising:
a heat exchanger (41) having at least one first conduit (41A) and at least one second conduit (41B) in heat exchange relationship with the at least one first conduit (41A);
a main conduit (42) directing a main flow of fuel from a fuel source (31) to a combustion chamber of the aircraft engine (10);
a pump (44) hydraulically connected to the main conduit (42) for driving the main fuel flow through the main conduit (42) to the combustion chamber;
a return conduit (46) receiving excess fuel outputted by the pump (44) and exceeding a fuel requirement of the combustion chamber, the return conduit (46) having a return inlet hydraulically connected to the main conduit (42) downstream of the pump (44) and a return outlet hydraulically connected to the main conduit (42) upstream of the pump (44), the return conduit (46) hydraulically connected to the at least one second conduit (41B) of the heat exchanger (41); the system being **characterised in that**
an actuator (45) has an actuator inlet (45A) hydraulically connected to the main conduit (42) downstream of the pump (44) and an actuator outlet (45B) hydraulically connected to the main conduit (42) upstream of the pump (44) while bypassing the heat exchanger (41), and **in that** the system is configured such that a pressure differential between the actuator inlet (45A) and the actuator outlet (45B) remains substantially unchanged with variations of a fuel flow through the at least one second conduit (41B) of the heat exchanger (41).

2. The heat exchange system (40) of claim 1, wherein the pump (44) is a high-pressure pump, a low-pressure pump (43) located upstream of the high-pressure pump (44) and hydraulically connected on the main conduit (42).

3. The heat exchanger system (40) of claim 2, wherein the return conduit (46) is hydraulically connected to the main conduit (42) between the high-pressure pump (44) and the low-pressure pump (43), the low-pressure pump (43) optionally including an impeller and the high-pressure pump (44) optionally being a fixed-displacement pump.

4. The heat exchange system (40) of any preceding claim, wherein the actuator outlet (45B) is hydraulically connected to the return conduit (46) at a connection point (P4) downstream of the heat exchanger (41).

5. The heat exchange system (40) of any preceding claim, comprising a bypass conduit (47) having a bypass inlet hydraulically connected to the return conduit (46) upstream of the heat exchanger (41) and a bypass outlet hydraulically connected to the main conduit (42) upstream of the pump (44)

6. The heat exchange system (40) of claim 5, comprising a controlled orifice (49) between the bypass inlet and the bypass outlet, the controlled orifice (49) being optionally variable in size for controlling a flow of a fluid flowing into the bypass conduit (47).

7. A method of operating a heat exchange system (40) of an aircraft engine (10), comprising:
feeding fuel to a combustor (16) of the aircraft engine (10) with a pump (44);
flowing a spill flow (F1) of the pump (44) through a heat exchanger (41) to exchange heat between the spill flow (F1) and another fluid;
reinjecting the spill flow (F1) upstream of the pump (44);
feeding an actuator (45) with fuel outputted by the pump (44); and
injecting an output fuel flow from the actuator (45) to a location upstream of the pump (44) while bypassing the heat exchanger (41),
wherein a pressure differential between an actuator inlet (45A) and an actuator outlet (45B) remains substantially unchanged with variations of a fuel flow through the heat exchanger (41).

8. The method of claim 7, wherein the reinjecting the spill flow (F1) includes flowing the spill flow (F1) into a return conduit (46) in fluid flow communication with the heat exchanger (41).

9. The method of claim 8, wherein the injecting of the output fuel flow from the actuator (45) includes injecting the output fuel flow into the return conduit (46) at a connection point (P4) on the return conduit (46) and located downstream of the heat exchanger (41).

10. The method of claim 8 or 9, wherein the feeding of the fuel to the combustor (16) includes drawing fuel from a fuel source (31) with a second pump (43), and the reinjecting of the spill flow (F1) includes reinjecting the spill flow (F1) into a main fuel conduit (42) at a connection point (P2) between the pump (44) and the second pump (43).

11. The method of any of claims 7 to 10, comprising flowing a portion (F4) of the spill flow (F1) outside the heat exchanger (41) such that the portion (F4) of the spill flow (F1) bypasses the heat exchanger (41), and optionally further comprising injecting the portion (F4) of the spill flow (F1) upstream of the pump (44).

12. The method of claim 11, comprising controlling a mass flow rate of the portion (F4) of the spill flow (F1), optionally by flowing the portion (F4) of the spill flow (F1) through a controlled orifice (49) and varying a size of the controlled orifice (49) to vary a mass flow rate of fuel through the heat exchanger (41).

13. The method of any of claims 7 to 12, wherein the flowing of the spill flow (F1) of the pump (44) through the heat exchanger (41) to exchange heat between the spill flow (F1) and another fluid includes exchanging heat between the fuel and oil via the heat exchanger (41).

14. The method of any of claims 7 to 13, comprising receiving a sensor signal from at least one sensor (50), the sensor signal indicative of a temperature of the fuel fed to the combustor (16) being lower than a temperature threshold, the method comprising increasing a mass flow rate of the fuel flowing through the heat exchanger (41).

15. The method of claim 14, wherein the increasing of the mass flow rate includes increasing an output mass flow rate of the pump (44) and/or decreasing a bypass mass flow rate of fuel that bypasses the heat exchanger (41).

## Patentansprüche

1. Wärmeaustauschsystem (40) für ein Flugzeugtriebwerk (10), umfassend:
einen Wärmeaustauscher (41), der mindestens eine erste Leitung (41A) und mindestens eine zweite Leitung (41B) aufweist, die in Wärmeaustauschbeziehung mit der mindestens einen ersten Leitung (41A) steht;
eine Hauptleitung (42), die einen Hauptkraftstoffstrom von einer Kraftstoffquelle (31) zu einer Brennkammer des Flugzeugtriebwerks (10) leitet;
eine Pumpe (44), die hydraulisch mit der Hauptleitung (42) verbunden ist, um den Hauptkraftstoffstrom durch die Hauptleitung (42) zu der Brennkammer zu treiben;
eine Rückführleitung (46), die überschüssigen Kraftstoff aufnimmt, der von der Pumpe (44) ausgegeben wird und einen Kraftstoffbedarf der Brennkammer übersteigt, wobei die Rückführleitung (46) einen Rückführeinlass, der hydraulisch mit der Hauptleitung (42) stromabwärts der Pumpe (44) verbunden ist, und einen Rückführauslass aufweist, der hydraulisch mit der Hauptleitung (42) stromaufwärts der Pumpe (44) verbunden ist, wobei die Rückführleitung (46) hydraulisch mit der mindestens einen zweiten Leitung (41B) des Wärmeaustauschers (41) verbunden ist; wobei das System **dadurch gekennzeichnet ist, dass**
ein Aktuator (45) einen Aktuatoreinlass (45A) aufweist, der hydraulisch mit der Hauptleitung (42) stromabwärts der Pumpe (44) verbunden ist, und einen Aktuatorauslass (45B), der hydraulisch mit der Hauptleitung (42) stromaufwärts der Pumpe (44) verbunden ist, während er den Wärmeaustauscher (41) umgeht, und dass das System so konfiguriert ist, dass eine Druckdifferenz zwischen dem Aktuatoreinlass (45A) und dem Aktuatorauslass (45B) bei Änderungen eines Kraftstoffstroms durch die mindestens eine zweite Leitung (41B) des Wärmeaustauschers (41) im Wesentlichen unverändert bleibt.

2. Wärmeaustauschsystem (40) nach Anspruch 1, wobei die Pumpe (44) eine Hochdruckpumpe ist, eine Niederdruckpumpe (43) stromaufwärts der Hochdruckpumpe (44) angeordnet und hydraulisch mit der Hauptleitung (42) verbunden ist.

3. Wärmeaustauschsystem (40) nach Anspruch 2, wobei die Rückführleitung (46) hydraulisch mit der Hauptleitung (42) zwischen der Hochdruckpumpe (44) und der Niederdruckpumpe (43) verbunden ist, wobei die Niederdruckpumpe (43) optional ein Laufrad beinhaltet und die Hochdruckpumpe (44) optional eine Pumpe mit fester Verdrängung ist.

4. Wärmeaustauschsystem (40) nach einem der vorhergehenden Ansprüche, wobei der Aktuatorauslass (45B) hydraulisch mit der Rückführleitung (46) an einem Verbindungspunkt (P4) stromabwärts des Wärmeaustauschers (41) verbunden ist.

5. Wärmeaustauschsystem (40) nach einem der vorhergehenden Ansprüche, umfassend eine Umgehungsleitung (47), die einen Umgehungseinlass aufweist, der hydraulisch mit der Rückführleitung (46) stromaufwärts des Wärmeaustauschers (41) verbunden ist, und einen Umgehungsauslass, der hydraulisch mit der Hauptleitung (42) stromaufwärts der Pumpe (44) verbunden ist.

6. Wärmeaustauschsystem (40) nach Anspruch 5, umfassend eine gesteuerte Öffnung (49) zwischen dem Umgehungseinlass und dem Umgehungsauslass, wobei die gesteuerte Öffnung (49) optional in ihrer Größe variabel ist, um einen Fluidstrom zu steuern, der in die Umgehungsleitung (47) strömt.

7. Verfahren zum Betreiben eines Wärmeaustauschsystems (40) eines Flugzeugtriebwerks (10), umfassend:
Zuführen von Kraftstoff zu einer Brennkammer (16) des Flugzeugtriebwerks (10) mit einer Pumpe (44);
Strömenlassen eines Überlaufstroms (F1) der Pumpe (44) durch einen Wärmeaustauscher (41) zum Wärmeaustausch zwischen dem Überlaufstrom (F1) und einem anderen Fluid;
Wiedereinleiten des Überlaufstroms (F1) stromaufwärts der Pumpe (44) ;
Zuführen von Kraftstoff, der von der Pumpe (44) ausgegeben wurde, zu einem Aktuator (45); und
Einleiten eines Ausgabe-Kraftstoffstroms von dem Aktuator (45) zu einer Stelle stromaufwärts der Pumpe (44) unter Umgehung des Wärmeaustauschers (41),
wobei eine Druckdifferenz zwischen einem Aktuatoreinlass (45A) und einem Aktuatorauslass (45B) bei Änderungen eines Kraftstoffstroms durch den Wärmeaustauscher (41) im Wesentlichen unverändert bleibt.

8. Verfahren nach Anspruch 7, wobei das Wiedereinleiten des Überlaufstroms (F1) Strömenlassen des Überlaufstroms (F1) in eine Rückführleitung (46) beinhaltet, die in Fluidstromverbindung mit dem Wärmeaustauscher (41) steht.

9. Verfahren nach Anspruch 8, wobei das Einleiten des Ausgabe-Kraftstoffstroms von dem Aktuator (45) Einleiten des Ausgabe-Kraftstoffstroms in die Rückführleitung (46) an einem Verbindungspunkt (P4) an der Rückführleitung (46) beinhaltet, der sich stromabwärts des Wärmeaustauscher (41) befindet.

10. Verfahren nach Anspruch 8 oder 9, wobei das Zuführen des Kraftstoffs zu der Brennkammer (16) Ansaugen von Kraftstoff aus einer Kraftstoffquelle (31) mit einer zweiten Pumpe (43) beinhaltet und das Wiedereinleiten des Überlaufstroms (F1) Wiedereinleiten des Überlaufstroms (F1) in eine Hauptkraftstoffleitung (42) an einem Verbindungspunkt (P2) zwischen der Pumpe (44) und der zweiten Pumpe (43) beinhaltet.

11. Verfahren nach einem der Ansprüche 7 bis 10, umfassend das Strömenlassen eines Teils (F4) des Überlaufstroms (F1) außerhalb des Wärmeaustauschers (41), sodass der Teil (F4) des Überlaufstroms (F1) den Wärmeaustauscher (41) umgeht, und optional ferner umfassend Einleiten des Teils (F4) des Überlaufstroms (F1) stromaufwärts der Pumpe (44).

12. Verfahren nach Anspruch 11, umfassend Steuern einer Massendurchflussrate des Teils (F4) des Überlaufstroms (F1), optional durch Strömenlassen des Teils (F4) des Überlaufstroms (F1) durch eine gesteuerte Öffnung (49) und Variieren einer Größe der gesteuerten Öffnung (49), um eine Massendurchflussrate des Kraftstoffs durch den Wärmeaustauscher (41) zu variieren.

13. Verfahren nach einem der Ansprüche 7 bis 12, wobei das Strömenlassen des Überlaufstroms (F1) der Pumpe (44) durch den Wärmeaustauscher (41) zum Austausch von Wärme zwischen dem Überlaufstrom (F1) und einem anderen Fluid Austauschen von Wärme zwischen dem Kraftstoff und Öl über den Wärmeaustauscher (41) beinhaltet.

14. Verfahren nach einem der Ansprüche 7 bis 13, umfassend Empfangen eines Sensorsignals von mindestens einem Sensor (50), wobei das Sensorsignal eine Temperatur des Kraftstoffs anzeigt, der der Brennkammer (16) zugeführt wird, die unter einem Temperaturschwellenwert liegt, wobei das Verfahren Erhöhen einer Massendurchflussrate des Kraftstoffs umfasst, der durch den Wärmeaustauscher (41) fließt.

15. Verfahren nach Anspruch 14, wobei das Erhöhen der Massendurchflussrate Erhöhen einer Ausgabe-Massendurchflussrate der Pumpe (44) und/oder Verringern einer Umgehungs-Massendurchflussrate des Kraftstoffs beinhaltet, der den Wärmeaustauscher (41) umgeht.

## Revendications

1. Système d'échange de chaleur (40) pour moteur d'aéronef (10), comprenant :
un échangeur de chaleur (41) ayant au moins un premier conduit (41A) et au moins un second conduit (41B) en relation d'échange de chaleur avec ledit au moins un premier conduit (41A) ;
un conduit principal (42) dirigeant un flux principal de carburant depuis une source de carburant (31) vers une chambre de combustion du moteur d'aéronef (10) ;
une pompe (44) reliée hydrauliquement au conduit principal (42) pour entraîner le flux de carburant principal à travers le conduit principal (42) jusqu'à la chambre de combustion ;
un conduit de retour (46) recevant l'excès de carburant délivré par la pompe (44) et dépassant un besoin en carburant de la chambre de combustion, le conduit de retour (46) ayant une entrée de retour reliée hydrauliquement au conduit principal (42) en aval de la pompe ( 44) et une sortie de retour reliée hydrauliquement au conduit principal (42) en amont de la pompe (44), le conduit de retour (46) étant relié hydrauliquement à l'au moins un second conduit (41B) de l'échangeur de chaleur (41) ; le système étant **caractérisé en ce que**
un actionneur (45) possède une entrée d'actionneur (45A) reliée hydrauliquement au conduit principal (42) en aval de la pompe (44) et une sortie d'actionneur (45B) reliée hydrauliquement au conduit principal (42) en amont de la pompe (44) tout en contournant l'échangeur de chaleur (41), et **en ce que** le système est configuré de sorte qu'une différence de pression entre l'entrée de l'actionneur (45A) et la sortie de l'actionneur (45B) reste sensiblement inchangée avec les variations d'un flux de carburant à travers au moins un second conduit (41B) de l'échangeur de chaleur (41).

2. Système d'échange de chaleur (40) selon la revendication 1, dans lequel la pompe (44) est une pompe haute pression, une pompe basse pression (43) située en amont de la pompe haute pression (44) et reliée hydrauliquement sur le conduit principal (42) .

3. Système d'échange de chaleur (40) selon la revendication 2, dans lequel le conduit de retour (46) est relié hydrauliquement au conduit principal (42) entre la pompe haute pression (44) et la pompe basse pression (43), la pompe basse pression (43) comportant éventuellement un impulseur et la pompe haute pression (44) étant éventuellement une pompe à cylindrée fixe.

4. Système d'échange de chaleur (40) selon une quelconque revendication précédente, dans lequel la sortie de l'actionneur (45B) est reliée hydrauliquement au conduit de retour (46) à un point de connexion (P4) en aval de l'échangeur de chaleur (41).

5. Système d'échange de chaleur (40) selon une quelconque revendication précédente, comprenant un conduit de dérivation (47) ayant une entrée de dérivation reliée hydrauliquement au conduit de retour (46) en amont de l'échangeur de chaleur (41) et une sortie de dérivation reliée hydrauliquement au conduit principal (42) en amont de la pompe (44).

6. Système d'échange de chaleur (40) selon la revendication 5, comprenant un orifice contrôlé (49) entre l'entrée de dérivation et la sortie de dérivation, l'orifice commandé (49) étant éventuellement de taille variable pour contrôler un flux d'un fluide s'écoulant dans le conduit de dérivation (47).

7. Procédé de fonctionnement d'un système d'échange de chaleur (40) d'un moteur d'aéronef (10), comprenant :
l'alimentation en carburant d'une chambre de combustion (16) du moteur d'aéronef (10) avec une pompe (44) ;
l'écoulement d'un flux de déversement (F1) de la pompe (44) à travers un échangeur de chaleur (41) pour échanger de la chaleur entre le flux de déversement (F1) et un autre fluide ;
la réinjection du flux déversé (F1) en amont de la pompe (44) ;
l'alimentation d'un actionneur (45) avec du carburant délivré par la pompe (44) ; et
l'injection du flux de carburant de sortie depuis l'actionneur (45) vers un emplacement en amont de la pompe (44) tout en contournant l'échangeur de chaleur (41),
dans lequel une différence de pression entre une entrée d'actionneur (45A) et une sortie d'actionneur (45B) reste sensiblement inchangée avec les variations d'un flux de carburant à travers l'échangeur de chaleur (41).

8. Procédé selon la revendication 7, dans lequel la réinjection du flux déversé (F1) comporte l'écoulement du flux déversé (F1) dans un conduit de retour (46) en communication fluidique avec l'échangeur de chaleur (41).

9. Procédé selon la revendication 8, dans lequel l'injection du flux de carburant de sortie de l'actionneur (45) comporte l'injection du flux de carburant de sortie dans le conduit de retour (46) au niveau d'un point de connexion (P4) sur le conduit de retour (46) et situé en aval de l'échangeur de chaleur (41).

10. Procédé selon la revendication 8 ou 9, dans lequel l'alimentation en carburant de la chambre de combustion (16) comporte le prélèvement de carburant à partir d'une source de carburant (31) avec une seconde pompe (43), et la réinjection du flux déversé (F1) comporte la réinjection du flux de déversement (F1) dans un conduit de carburant principal (42) au niveau d'un point de connexion (P2) entre la pompe (44) et la seconde pompe (43).

11. Procédé selon l'une quelconque des revendications 7 à 10, comprenant l'écoulement d'une partie (F4) du flux de déversement (F1) à l'extérieur de l'échangeur de chaleur (41) de sorte que la partie (F4) du flux de déversement (F1) contourne l'échangeur de chaleur ( 41), et comprenant également éventuellement l'injection de la partie (F4) du flux de déversement (F1) en amont de la pompe (44).

12. Procédé selon la revendication 11, comprenant le contrôle d'un flux massique de la partie (F4) du flux de déversement (F1), éventuellement en faisant s'écouler la partie (F4) du flux de déversement (F1) à travers un orifice contrôlé (49) et en faisant varier une taille de l'orifice contrôlé (49) pour faire varier un flux massique de carburant à travers l'échangeur de chaleur (41).

13. Procédé selon l'une quelconque des revendications 7 à 12, dans lequel l'écoulement du flux de déversement (F1) de la pompe (44) à travers l'échangeur de chaleur (41) pour échanger de la chaleur entre le flux de déversement (F1) et un autre fluide comporte l'échange de chaleur entre le carburant et l'huile à travers l'échangeur de chaleur (41).

14. Procédé selon l'une quelconque des revendications 7 à 13, comprenant la réception d'un signal de capteur provenant d'au moins un capteur (50), le signal de capteur indiquant une température du carburant introduit dans la chambre de combustion (16) étant inférieure à un seuil de température, le procédé comprenant l'augmentation du flux massique du carburant s'écoulant à travers l'échangeur de chaleur (41).

15. Procédé selon la revendication 14, dans lequel l'augmentation du flux massique comporte l'augmentation du flux massique de sortie de la pompe (44) et/ou la diminution du flux massique de dérivation du carburant qui contourne l'échangeur de chaleur (41).
